# EUROPEAN PATENT SPECIFICATION

(11) **EP 3 901 024 B1**
(45) Date of publication and mention of the grant of the patent: **07.01.2026**
(21) Application number: 20171409.4
(22) Date of filing: 24.04.2020
(51) Int. Cl.: B62M 6/90, B62H 5/00, B62J 43/13, B62J 43/20, B62K 19/40

(54) **BICYCLE FRAME, BATTERY UNIT AND METHOD FOR MOUNTING THE SAME**
FAHRRADRAHMEN, BATTERIEEINHEIT UND VERFAHREN ZUR MONTAGE DAVON
CADRE DE BICYCLETTE, UNITÉ DE BATTERIE ET SON PROCÉDÉ DE MONTAGE

(43) Date of publication of application: 27.10.2021
(73) Proprietor: Accell Group B.V., 8444 AR Heerenveen (NL)
(72) Inventor: SCHLERETH, Nico, 97705 Oehrberg (DE)
(74) Representative: V.O.

(56) References cited:
- CN-A- 108 116 581
- CN-U- 202 863 703
- CN-U- 203 332 333
- CN-U- 207 038 598
- CN-U- 208 085 923
- DE-A1- 102018 006 689
- DE-A1- 102018 006 690
- DE-A1- 102019 206 546
- DE-A1- 102019 207 103
- DE-U1- 202016 104 156

## Description

The present invention relates to a bicycle frame, comprising a tube section having a receiving space for receiving at least one battery unit, suitable as a source of energy for an electromotive bicycle drive; battery guiding means, for guiding the battery unit along a first axis A₁ between an insertion position Pᵢ and a temporary mounting position Pt in the receiving space; and battery locking means, for locking and/or unlocking the battery unit in the receiving space in a final mounted position.

Further, the invention relates to a battery and a bicycle to be used with such a bicycle frame or comprising such a bicycle frame, respectively. Also, the invention relates to a method for mounting a battery at a bicycle frame.

Bicycle frames where batteries can be mounted to, and especially be mounted at a receiving space, are known from the prior art, especially in combination with electronically driven bicycles, i.e. e-bikes. Different kind of mounting mechanisms and methods, respectively, are known.

CN 108 116 581 A discloses the preamble of claims 1 and 20. DE 10 2016 010338 A1 for example discloses a bicycle frame, where a battery unit is stored in an interior receiving space of a tube section of that frame, wherein it can be entered to that tube section via a front face of that tube section and be moved along a main axis of that tube section to a final mounting position. The insertion opening of the receiving space is arranged in the downward end of this tube, and especially the downward end of a downtube of the bicycle frame.

DE 10 2018 006690 A1 discloses an e-bike with a frame and with at least one wheel arranged on the frame). An electric motor for driving at least one wheel is supplied with electrical energy by means of a rechargeable battery. The battery is removably arranged on the frame, in particular in a receptacle on the frame. A holding device for the battery is provided on the frame. The holding device is designed in such a way that the battery can be snapped into place by inserting it in the holding device and that the battery can only be removed from the holding device by actuating a lock.

CN 203 332 333 U discloses a battery fixing device for an electric bicycle. The device comprises a fixing assembly and a battery box. The fixing assembly is installed on a bicycle body of the electric bicycle. A power plug is fixedly arranged on the fixing assembly. The battery box is detachably located and installed on the fixing assembly and fixed through the fixing assembly relative to the position of the bicycle body of the electric bicycle. A power socket matched with the power plug is fixedly arranged on the battery box. The fixing assembly comprises a box base, a guide rail and a locking unit, wherein the box base is used for containing the head end of the battery box, the guide rail is used for being in sliding connection with the battery box in a matched mode and guiding the head end of the battery box to enter the interior of the box base, and the locking unit is installed on the bicycle body of the electric bicycle in a located mode. One side of the box base and one end of the guide rail are both coaxially hinged to the bicycle body of the electric bicycle. The guide rail can drive the box base to coaxially rotate. The locking unit enables the other end of the guide rail to be separated from and locked on the bicycle body of the electric bicycle.

DE 10 2018 006689 A1 discloses an e-bike with a frame and with at least one wheel arranged on the frame. An electric motor for driving at least one wheel (3, 4) is supplied with electrical energy by means of a rechargeable battery. The battery is arranged on the frame, in particular in a receptacle on the frame, so that it can be detachably attached. A holding device is provided on the frame so that the battery moves into an intermediate position after it has been released. In the intermediate position, the battery is held by the holding device. Furthermore, the battery can be removed manually from the frame from the intermediate position.

DE 20 2016 104156 U1 discloses a holding device for holding an accumulator with a first holding element, having a bolt and a force-tensioned locking element, at least the bolt exerting a locking force on one side of an accumulator arranged in the holding device in a first locking position. To remove the accumulator, the bolt must be brought into an unlocked position, wherein the force-tensioned locking element still locks the accumulator in the holder. Then the force-tensioned locking element must be withdrawn or pushed back in order to be able to remove the accumulator from the holder.

US 9,616,966 B2 discloses a system for mounting a battery unit, where the battery unit can be swivelled into an insertion opening to a final mounting position from the undersize of a downtube.

The battery units mounted to the bicycle frames need to be secured in a reliable manner to the bicycle frame. Here, the combination of securing the battery unit to the frame and providing a secure electrical connection is a challenge, resulting in highly sophisticated and expensive solutions, known from the art.

It is therefore an object of the present invention to provide a solution for mounting a battery unit to a bicycle frame, ensuring secure mounting at and electrical connection between the battery, the frame and respective parts of the electric bicycle. These technical relationships are even more difficult to be achieved when also providing a secure anti-theft protection. The known systems of the art are suffering from providing all of these three requirements together in a reliable manner. It is therefore a further object of the present invention to provide a reliable mounting system for a battery unit to a bicycle frame.

These objects are solved by the arrangements and methods according to the independent claims.

Especially, this object is solved by a bicycle frame, comprising a tube section, having a receiving space for receiving at least one battery unit, suitable as a source of energy for an electromotive bicycle drive; battery guiding means, for guiding the battery unit along a first axis A₁ between an insertion position Pᵢ and a temporary mounting position Pt in the receiving space; battery locking means, for locking and/or unlocking the battery unit in the receiving space in a final mounting position P_{f}; wherein the battery locking means is an active locking means, comprising at least one electrically driven locking element, arranged for translationally and/or rotationally actively moving the battery unit between its temporary mounting position Pt and its final mounting position P_{f} along a second axis A₂.

Also, this object is solved by a battery unit suitable as a source of energy for an electromotive bicycle drive, comprising at least one counter locking element arranged that it can be mechanically connected to at least one electrically driven locking element of a battery locking means arranged at a bicycle frame in such a way, that the battery unit can be translationally and/or rotationally moved in a receiving space of a tube section of the bicycle frame between a temporary mounting position Pₜ and a final mounting position P_{f} along a second axis A₂.

Further, the object is solved by Method for mounting and/or detaching a battery unit, suitable as a source of energy for an electromotive bicycle drive (50), to a bicycle frame, comprising the steps of: inserting the battery unit to a tube section of the bicycle frame, having a receiving space for receiving at least one battery unit in an insertion position Pᵢ; moving the battery unit along a battery guiding means (10) along a first axis A₁ from the insertion position Pᵢ to a temporary mounting position Pt in the receiving space; locking the battery unit by a battery locking means, for locking the battery unit in the receiving space in a final mounting position P_{f}; wherein, while locking and/or unlocking the battery unit, the battery unit is moved by at least one electrically driven locking element of the battery locking means, arranged as an active locking means, translationally and/or rotationally, moving the battery between its temporary mounting position Pt and its final mounting position P_{f} along a second axis A₂.

It is the gist of the invention that the battery locking means comprises at least one locking element, electrically driven, to move the battery unit between its temporary mounting position Pₜ and its final mounted position P_{f} along a second axis. This movement can be translational and/or rotational, wherein rotational movements would then optionally mean, that the battery unit is rotated around this second axis. Both movements can be combined. It is also possible that the locking means moves the battery unit from the temporary mounting position Pt to the final mounting position P_{f} and/or from the final mounting position P_{f} to the temporary mounting position Pt. Also a further movement in direction or from the direction of the insertion position might optionally be arranged.

In a special embodiment the battery locking means is arranged such that the battery unit can be moved from the final mounting position P_{f} to the temporary mounting position Pt by the battery locking means.

As mentioned, the movement of the battery unit between the temporary mounting position and the final mounting position can be translational and/or rotational. Optionally, the battery locking means is arranged to not only move the battery unit between the temporary mounting position Pₜ and the final mounting position P_{f}, but also to keep it locked in at least one of these positions, and especially in the final mounting position. By keeping it locked and, for example, only releasing it by use of the electrically riven locking element, an improved theft protection is provided. Optionally movement of the battery unit is hindered at least partly when in the final mounting position, except of the movement activated by the locking means and especially the electrically driven locking element.

Optionally it holds that in the final mounting position, the battery unit is locked against removing it and especially moving it to the temporary mounting position Pt and from there to the insertion position Pᵢ, wherein this locked status can only be removed, especially transferred to an unlocked status, by activating the locking element.

When activating the locking element to initiate an unlocking movement, optionally the interlocking between the battery locking unit and the battery locking means and the locking element, respectively, is released, such that the battery unit can be moved from the final mounting position to the temporary mounting position. It might also be possible to provide the battery locking means in such a way, that locking of the battery unit is also provided in the temporary mounting position, such that further movement from the temporary mounting position to the insertion position is only possible by activating the locking means, and especially the electrically driven locking element or an additional driven locking element. The same might apply vice versa, i.e. in the opposite direction.

Optionally it holds that the receiving space is at least partially an interior space inside the tube section. Although it is possible to provide the receiving space outside of the tube section, for example for receiving an external battery unit at an outer wall of a tube of a bicycle frame, the receiving space is optionally provided inside the tube in a respective interior space. In detail, the battery unit is optionally at least partially stored inside the tube, especially after it has been moved from the insertion position to at least the temporary mounting position and/or the final mounting position.

It optionally holds that in the temporary mounting position the battery unit is received at least partially in the receiving space and the interior space respectively. It optionally holds that the battery unit is received in the receiving space and the interior space, respectively, in the final mounting position at least partially. Also, in the temporary mounting position and/or the final mounting position, the battery unit is optionally still "touchable" by a user from outside of the tube section, and especially through an insertion opening for especially moving the battery unit along the first axis A₁ and/or the second axis A₂. "Touchable" might be interpreted that the user can put some direct action, like pressing, swivelling, pulling etc. on the battery unit.

It optionally it holds that the battery unit is a longitudinal battery unit. It optionally has a front face and is arranged, when it moves from the insertion position Pᵢ to the temporary mounting position Pₜ and/or the final mounting position P_{f} with such front face ahead and/or when it moves from the final mounting position P_{f} and/or the temporary mounting position Pt to the insertion position Pᵢ with such front face at the back. Optionally, the longitudinal axis of the battery unit is arranged coaxial to the first axis A₁, when the battery unit is in the insertion position and/or the temporary mounting position and/or the final mounting position. Such longitudinal axis of the battery unit can also be called the main axis of the battery unit.

Optionally it holds that the battery locking means is arranged at least partially at an end portion of the tube section, and especially in the vicinity of an electromotive bicycle drive, arranged at the frame, and/or at least partially at a front face portion of a longitudinal battery unit. By such an arrangement, connection between the battery locking means and the respective locking element and a cooperating locking element, also part of the battery locking means but arranged at the battery unit, can be provided after moving the battery unit from the insertion position to the temporary mounting position. This especially allows that the battery locking means are arranged inside a tube section and especially in the interior space such that it is not easily reached by a user, thereby improving the theft protection. Manipulation of the battery locking means is reliably hindered by such an arrangement.

Optionally it holds that the battery guiding means is arranged such that in the temporary mounting position Pt the battery unit is mounted fixed at the tube section but moveable along one direction only, optionally along the moving direction to the final mounting position P_{f}, and/or optionally along the first axis A₁ and/or the second axis A₂. Nevertheless, it is possible that movement of the battery unit along a deviating axis, deviating from the first axis A₁ and/or the second axis A₂, is possible, especially in a lesser degree, e.g. for lesser than 4 mm, optionally lesser than 2 mm and more optionally lesser than 1 mm, and especially by providing some play between the battery unit and the guiding means. By providing such deviating movement and especially a play in direction of an axis deviating from the first axis A₁ and/or the second axis A₂ friction forces can be reduced so that the battery unit can be easily moved along the battery guiding means. Also a movement for securing the battery unit in a defined seat can be provided, as will be explained in the following.

Optionally it holds that the battery guiding means is arranged such that the battery unit is moveable along the first axis A₁between the insertion position Pᵢ and the temporary mounting position Pt parallel to a main axis Aₓ of the tube section, and/or between the temporary mounting position Pt and the final mounting position P_{f} along a second axis A₂, wherein the second axis A₂ optionally is the first **axis.**

Optionally providing the second axis A₂ as to be coaxial to the first axis A₁ provides a reliable and easy to arrange battery guiding means. It is also possible to arrange the second axis A₂ deviating from axis A₁, for example that the axis A₂ is inclined to the axis A₁ or is a rotational axis, wherein the first axis is a translational axis. Preferably it holds that the battery guiding means is arranged such that, after leaving the insertion position, the battery unit is at least in a section detained from moving in a direction deviating from the first axis A₁ and/or from the second axis A₂, and optionally detained but having, in at least one section, some play along an orthogonal axis, orthogonal to the first axis A₁ and/or the second axis A₂. This feature has already been explained before. Preferably it holds that a wedge or similar deviating means is provided and arranged such that especially when the battery unit is moved from the temporary mounting position to the final mounting position, the battery unit is forced in a forcing direction D_{for} and against at least one counter element, optionally the forcing axis A_{for} of the forcing direction D_{for} deviating from the first axis A₁ and/or the second axis A₂. This embodiment allows securing of the battery unit in press force during the movement along the first and/or the second axis. This, especially in combination with the before mentioned play and/or in combination with first and second axis deviating from each other and/or combined with sections were the battery unit can be moved in general into deviating directions, deviating from the first and second axis, allows e.g. an arrangement, where movement between the insertion position and the temporary mounting position is provided under less friction forces, wherein an increasing press fit bearing is reached when moving the battery unit from the temporary mounting position to the final mounting position and, optionally, a more and more loose bearing when moving from the final mounting position back to the temporary mounting position and/or the insertion position.

Such a wedged means could for example be a wedge surface the battery unit is sliding along and being forced in a direction deviating from the first and/or the second axis. Also, this wedge or similar deviating means can be a friction means, forcing the battery unit in a friction force bearing, securing it in the receiving section and especially additional to the locking element.

Optionally it holds that the tube section comprises an insertion opening, optionally arranged extending along at a side wall of the tube section and/or with a main extension axis A parallel to the first axis A₁, arranged such that the battery unit can be positioned in the insertion position Pᵢ, optionally arranged at least partially in the receiving space, and especially via movement in an insertion direction Dᵢ And/or along an insertion axis Aᵢ deviating from the first axis A₁ and especially a movement orthogonal to the first axis A₁. In other words, it preferably holds that the insertion direction is a different direction than the movement direction moving the battery unit from the insertion position to the temporary mounting position and/or moving it to the final mounting position. By such an arrangement the opening can be provided as to be slightly bigger than the battery unit only, reducing weakening of the tube section by the opening provided.

The insertion opening is optionally arranged at a side wall of the tube section and especially at a side wall directed downward when the bicycle frame is mounted to the bicycle. It is also possible to provide the insertion opening on an upward side of the tube section, such that it is directed upward when the frame is mounted to a bicycle. Also, the opening can be at any other position, especially at the longitudinal extending side wall of the tube section.

Optionally, the insertion opening is provided that a translational movement allows insertion of the battery unit from outside of the tube section into the receiving space and especially an interior space as mentioned before. Optionally, no swivelling movement of the battery unit is necessary.

Optionally it holds that by inserting the battery unit from outside of the tube section to the receiving space, the guiding means are cooperating with the tube section to guide the battery unit, and especially guiding elements, at the tube section are coming into cooperation with counter-guiding elements at the battery unit, or vice versa, securing the battery unit to allow the especially "one-axial movement" (with or optionally with the before explained deviating movement and the play, respectively) of the battery unit, and guided by the guiding means between the insertion position and the temporary mounting and/or the final mounting position.

It optionally holds that the battery guiding means comprises at least one guiding element at the tube section and at least one cooperating counter-guiding element at the battery unit, or vice versa, the guiding element and the counter-guiding element cooperating such that the battery unit is moveable and especially slideable between the insertion position Pᵢ and the temporary mounting position Pt and/or between the temporary mounting position Pₜ and the final mounting position P_{f}. As mentioned, the battery guiding means, and especially the guiding elements and the cooperating counter-guiding elements are arranged such that a reduced friction force is provided such that movement of the battery unit in the receiving space is possible. The guiding means might also comprise the before mentioned wedge or similar deviating means.

Optionally it holds that the guiding element comprises at least one slot-nut, arranged at the tube section, and the counter-guiding element at least one cooperating slot, arranged at the battery unit, or vice versa, optionally this slot extending parallel to the first axis A₁ and/or the second axis A₂. Besides such an arrangement, other guiding element means can be provided as known from the art, ensuring especially movement of the battery unit along the axis A₁ and/or axis A₂.

Optionally it holds that the locking element is cooperating with a counter locking element at the battery unit to transfer moving forced from the locking means to the battery unit and optionally thereby allowing movement of the battery unit relative to the tube section.

Optionally it holds that the locking element is arranged as a crown element and/or a hooking element, and/or a rotating threaded element, and/or a linear moveable force element, and/or a similar forcing element. A crown element can, for example, be a crown tooth rotating against a counter locking element, thereby pulling and/or pushing the battery unit along the respective moving axis. A hooking element can be a similar moveable hook, cooperating with the battery unit and the counter-locking element, pushing and/or pulling the battery unit when the hook is moved. A rotating threaded element can for example be a spindle drive interconnecting with a cooperating counter locking element, pushing and/or pulling the battery unit by rotating the spindle. Also an arrangement is possible where a threaded bolt is rotated cooperating with a counter locking element provided as a slot nut arranged at the battery unit, thereby pushing and/or pulling the battery unit especially between the temporary mounting position and the final mounting position. All these arrangements can be provided vice versa, that means one element can be provided at the bicycle frame and the other at the battery unit, or vice versa.

It preferably holds that the locking element cooperates with a counter-locking element at the battery unit or vice versa, to connect with and/or to disconnect from the battery unit and/or to force the battery unit from the final mounting position to the temporary mounting position.

Preferably it holds that a connection means is provided at the frame and optionally in the receiving space of the tube section or accompanying the tube section, comprising at least one connector element, for especially electrically connecting the battery unit to a battery controller or a similar electrical control means. Such connection means can, for example, be provided as a connector and especially as a "plug and receiver"- arrangement, provided at the frame and the battery unit, respectively.

Preferably it holds that an especially electrical connection, between the battery unit and the part to be connected at the bicycle, e.g. a battery controller etc. can be established by the connection means by a movement of the battery unit relative to the tube section and the bicycle frame respectively, identical to the movement of the battery when moving from the temporary mounting position to the final mounting position. This also applies for disconnecting the connection, in a vice versa direction i.e. that disconnection is allowed by a movement identical to the movement of the battery unit when being moved from the final mounting position to the temporary mounting position.

The connection means is optionally arranged, such that especially electrical connection is established when the battery unit is moved from the insertion position to the temporary mounting position, and especially when the battery unit reaches the temporary mounting position and/or when it is moved from the temporary mounting position to the final mounting position, and especially when it reaches the final mounting position. The same applies with regard to the disconnection, but in a vice versa direction.

Optionally it holds that the battery unit is especially electrically connected to the connection element in the temporary mounting position Pt and/or the final mounting position P_{f} and/or also in the positions in-between, and/or disconnected from the connection element before reaching the temporary mounting position Pₜ and/or before reaching the final mounting position P_{f}. It is also possible to provide intermediate connection statuses i.e. that in the temporary mounting position a part especially electrical connection is provided and in the final mounting position a full especially electrical connection. By such an arrangement it is for example possible to connect the driven locking element in the temporary mounting position with the battery unit but not a full battery controller, taking control of the bicycle.

The battery controller is, for example, fully connected with the battery unit when the battery unit has been transferred to the final mounting position.

Especially in this regard it is possible to provide an anti-theft mechanism by e.g. deactivating relevant bicycle parts and especially a bicycle motor, a bicycle controller and/or to activate a theft waring arrangement, like an alarm, when the battery unit is removed from the final mounting position and/or from the tube section without activating the locking means, e.g. by the application of a manual force by a user.

Further, it is possible to provide an identification means that allows activation of the control element only when a battery unit has been identified by a battery controller as to be an admissible battery. This can apply for identification of individual batteries, for example batteries in the possession of a user, but also with regard to batteries being built for the special bicycle range and batteries not being built for that bicycle range and for example harming the bicycle controller and the respective parts of the bicycle when attached to the bicycle.

Of course, such arrangement can also be combined with anti-theft means. A bicycle can for example be locked, e.g. by locking the bicycle control means, when the battery has been detached from the receiving space without activating or admissible activating the battery locking means. This of course also applies with regard to attaching a non-admissible battery.

Optionally it holds that the battery locking means and/or the connection means are at least partly arranged in an insert element, arranged at the frame, and especially in the receiving space of the tube section. This insert element is, for example, detachably arranged from the tube section as to be an individual part.

Optionally it holds that the insert element comprises an auxiliary battery unit, arranged for at least temporarily providing electrical energy to the battery locking means and/or electrical means of a bicycle and/or comprises at least one control means, like a battery controller or a similar electrical controller.

Optionally it holds that the insert element can be inserted to and/or removed from the tube section via the insertion opening, optionally in a state equipped with the battery locking means and/or a connection means and/or an auxiliary battery unit and/or control means.

Optionally it holds that the insert element can only be removed from the tube section in an unlocked status, i.e. a status where the locking means are in an unlocked state. Further, it optionally holds that the insert element can be only inserted to the tube section in an unlocked state.

Providing an insert element equipped with the before-mentioned means allows prefabrication of the insert element and relevant parts of the battery supply system and/or the bicycle control system etc. and inserting it in a prefabricated state in the tube section. This reduces assembly costs for the bicycle.

The battery unit optionally comprises battery cells for storing energy, controller means for controlling for example charging procedures, providing battery unit information, identification of the battery, controlling of additional means and especially a locking means, and further comprises the locking means itself or at least part of these locking means e.g. counter locking elements.

As mentioned before, the invention not only relates to a bicycle frame only, but also to a battery unit, suitable as a source of energy for an electromotive bicycle drive, comprising at least one counter-locking element, arranged so that it can be mechanically connected to at least one electrically driven locking element of a battery locking means and especially the battery locking means as described before, arranged at a bicycle frame in such a way that the battery unit can be translationally and/or rotationally moved in a receiving space of a tube section of the bicycle frame between a temporary mounting position Pₜ and a final mounting position P_{f} along a second axis A₂. According to the invention, the battery unit can be connected with such locking element of the battery locking means, such that it can be moved between at least two individual positions by such movement reliable securing of the battery unit in the final mounting position, and/or reliable electrical connection and/or disconnection can be provided. For redundancy reasons, all features mentioned in relation to the bicycle frame before, are also transferable to the battery unit and vice versa.

This also applies to the before-mentioned method for mounting and/or detaching a battery unit, and optionally the battery unit described herein, suitable as a source of energy for an electromotive bicycle drive, to a bicycle frame and especially the bicycle frame as explained herein. Also here, for redundancy reasons, it is referred to all the respective features mentioned herein, especially with regard to the battery unit and the bicycle frame, respectively.

Further embodiments of the invention are disclosed in the sub-claims.

These and other features, aspects, and advantages of the apparatus, systems and methods of the present disclosure will become better understood from the following description, appended claims, and accompanying drawing, wherein the drawings are disclosing:
- Fig. 1: an embodiment of a bicycle frame according to the invention with a battery unit in a pre-insertion position P-Pᵢ;
- Fig. 2: the embodiment of Fig. 1 with the battery unit in the insertion position;
- Fig. 3: the embodiment of Fig. 1 with the battery unit in the temporary mounting position;
- Fig. 4: the embodiment of Fig. 1 with the battery unit in a final mounting position;
- Fig. 5: a detailed view of the embodiment shown with Fig. 4;
- Fig. 6: an isometric detailed view of the embodiment shown with Fig. 4;
- Fig. 7: an embodiment of a battery unit as it may be used with the embodiment of Fig. 1;
- Fig. 8: the embodiment of Fig. 7 with part of a connected guiding element;
- Fig. 9: a detailed isometric view of the embodiment of Fig. 1 and especially of the tube section;
- Fig. 10: the embodiment of Fig. 9 without the tube section;
- Fig. 11: the embodiment of Fig. 9 with a different battery unit;
- Fig. 12: an isometric view of a different embodiment of the battery unit;
- Fig. 13: a detailed isometric view of a guiding element;
- Figs. 14 - 16: views of a different embodiment of the battery unit;
- Figs. 17 - 19: schematic views of different embodiments of the battery unit; and
- Figs. 20 - 22: different embodiments of the inventive bicycle frame and the battery unit, respectively.

Unless otherwise defined, all terms (including technical and scientific terms) used herein have the same meaning as commonly understood by one of ordinary skill in the art to which this invention belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise. All publications, patent applications, patents, and other references mentioned herein are incorporated by reference in their entirety. In case of conflict, the present specification, including definitions, will control.

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. The description of the exemplary embodiments is intended to be read in connection with the accompanying drawings, which are to be considered part of the entire written description. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. Relative terms as well as derivatives thereof should be construed to refer to the orientation as then described or as shown in the drawing under discussion. These relative terms are for convenience of description and do not require that the system be constructed or operated in a particular orientation unless stated otherwise.

Identical or similar parts might be depicted by identical reference signs, wherein indices might be used.

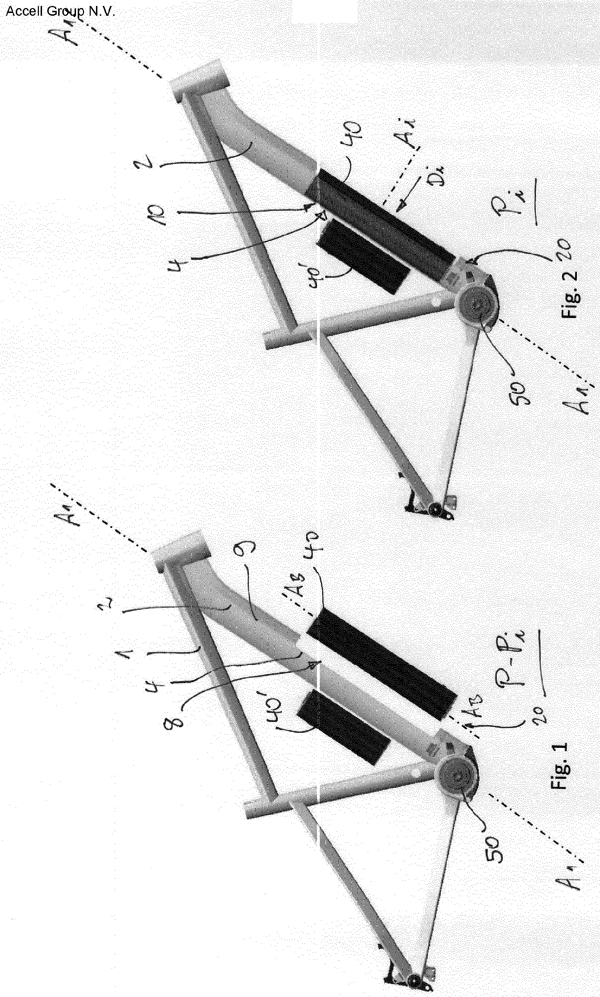

Figs. 1 - 5 are disclosing one embodiment of the bicycle frame 1 according to the invention, arranged for carrying a battery unit 40, wherein the battery unit 40 is shown in different positions P relative to the frame 1.

The bicycle frame 1 comprises a tube section 2 having a receiving space 4 for receiving the battery unit 40. The battery unit is suitable inter alia as a source of energy for an electromotive bicycle drive 50. Of course the battery unit can also be suitable as an electric source for other and especially additional means, like lighting means, control means, information means, etc. This is included in the suitability of the battery unit as a source for an electromotive bicycle drive.

As can be seen in Figs. 1 - 4 the frame may not only be equipped with a battery unit 40, here optionally arranged inside the tube section 2 and a receiving space 4, respectively, optionally arranged at least partly inside an interior space of the tube section 2, also a battery unit 40' can be provided at the bicycle frame 1 and a tube section 2, respectively, for example a range extender battery unit 40'. For such an external battery unit 40', and especially a battery arranged at and not inside a tube section 2, all the features mentioned herein are identically applicable and are therefore included in the scope of protection of the present application.

As will be explained further down below, the bicycle frame comprises battery guiding means 10 for guiding the battery unit 40 along a first axis A₁ between the insertion position Pᵢ shown with Fig. 2 and a temporary mounting position Pₜ in the receiving space 4.

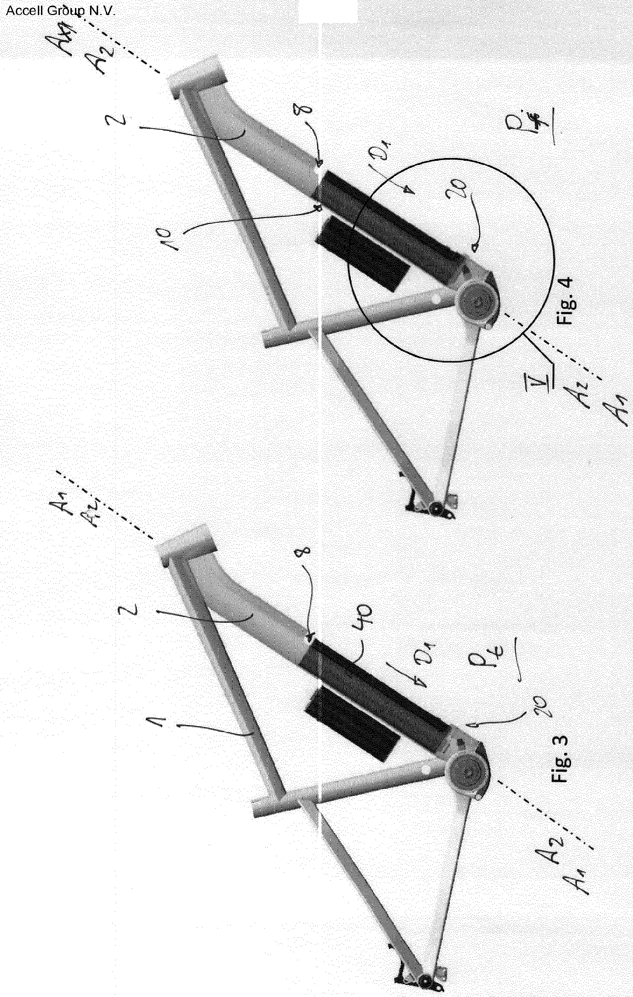

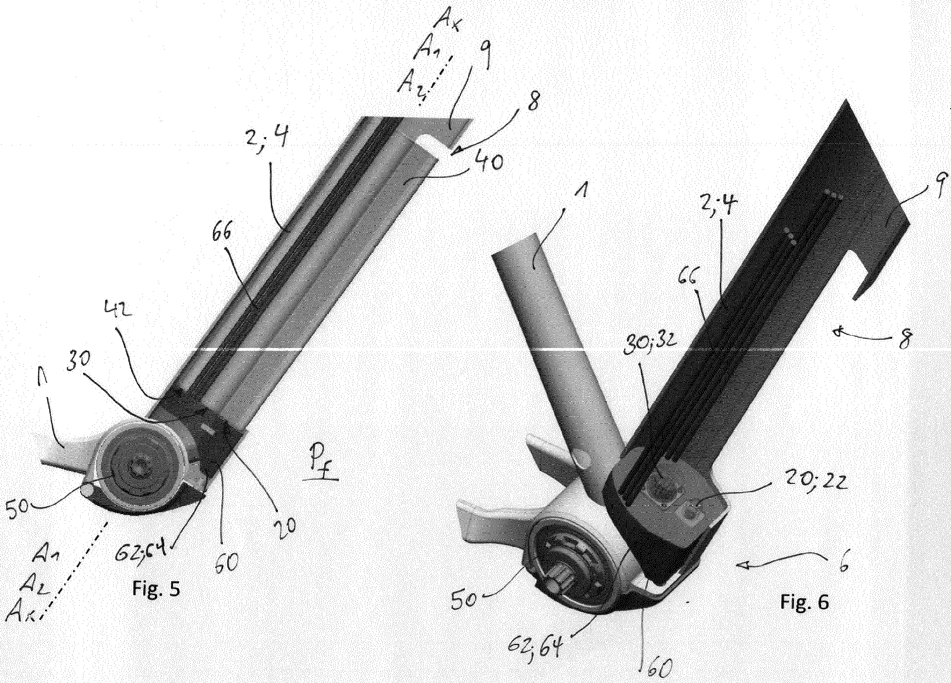

Also provided is a battery locking means 20, for locking and/or unlocking the battery unit 40 in the receiving space 4 in a final mounted position P_{f}, as shown with Fig. 4. According to the invention, the battery locking means 20 is an active locking means, comprising at least one electrically driven locking element 22 (see Fig. 6), arranged for moving the battery unit 40 between its temporary mounting position Pt, as shown with Fig. 3, and its final mounting position P_{f} along a second axis A₂ (see inter alia Fig. 4 and 5).

In principle, the method for mounting and/or detaching the battery unit 40 to the bicycle frame 1 comprises the following steps:
In a first step, the battery unit 40 is inserted from its pre-insertion position P-Pᵢ, as shown with Fig. 1, to the tube section 2, and here optionally in an interior receiving space 4 of the tube section 2 of the bicycle frame 1. The tube section here optionally comprises an insertion opening 8, optionally arranged extending along the side wall 9 of the tube section 2. The opening 8 might also extend with its main extension axis parallel to the first axis A₁. The opening 8 is optionally arranged so that the battery unit 40 can be positioned in the insertion position Pᵢ, optionally arranged at least partially in the receiving space 4. The battery can further optionally be positioned by a movement optionally translational movement along an insertion direction Dᵢ and/or an insertion axis Aᵢ, as shown with Fig. 2 and especially by a movement along an orthogonal insertion axis Aᵢ, which preferably runs orthogonal to the first axis A₁.

A second step is moving the battery unit along battery guiding means 10 and along a first axis A₁ from the insertion position Pᵢ to the temporary mounting position Pt in the receiving space 4. A further step is locking the battery unit by the battery locking means 20, for locking the battery unit 40 in the receiving space 4 in a final mounting position P_{f}. While locking and/or unlocking the battery unit 40, the battery unit 40 is moved by at least one electrically driven locking element 22 of the battery locking means 20, arranged as an active locking means, optionally translationally and/or rotationally, between its temporary mounting position Pₜ and its final mounting position P_{f} along a second axis A₂.

As shown with Figs. 1 and 2, here insertion of the battery unit 40 to the receiving space 4 of the tube section 2 is a translational movement only, i.e. not comprising a swivelling movement. Due to that arrangement, the dimensions of the insertion opening 8 can be slightly larger than the dimension of the battery unit 40, optionally up to 5%, further optionally up to 3% and further optionally up to 1% bigger than the battery unit outer surrounding.

Further, the battery locking means 20 may be arranged such that it can move the battery unit 40 from the final mounting position P_{f} to the temporary mounting position Pt. Optionally, for that movement the user does not need, and especially can't, manually move the battery unit within the receiving space. Movement is optionally possible by the locking means only. This especially provides anti-theft protection. Of course it is also possible to provide the battery locking means 20 in such a way that the battery unit is moved from the temporary mounting position Pₜ to the final mounting position P_{f} by aid of this locking means, and especially by the locking means only. Also it is possible, that a force manually applied to the battery unit e.g. by a user and/or a respective movement, activates the locking means and its respective moving of the battery unit especially from the temporary mounting position to the final mounting position.

The battery unit 40 might be a longitudinal battery unit 40 having a front face 42 (see Fig. 5). This front face 42 may be arranged such that when the battery moves from the insertion position Pᵢ to the temporary mounting position Pₜ and/or the final mounting position P_{f} with such front face 42 ahead. Also, the battery may be arranged such that the front face 42 may be at the back of the battery unit 40 when it moves from the final mounting position P_{f} and/or the temporary mounting position Pₜ to the insertion position Pᵢ.

The embodiment of Fig. 1 is disclosed with Figs. 5 - 13 in more detail, wherein different embodiments of battery guiding means 10 and battery units 40 are shown.

As can be seen with Fig. 5 and 6, the bicycle frame 1 comprises an insert element 60 arranged at the frame 1 and especially in the receiving space of the tube section 2. The battery locking means 20 and/or connection means 30 may be arranged at this insert element 60. The insert element 60 may also comprise an auxiliary battery unit 62, arranged for at least temporarily providing electrical energy to the battery locking means 20 and/or other electrical means of the bicycle. The insert element might also comprise a control means 64, like a battery controller or a similar electrical controller.

The insert element might be inserted through the opening 8 and especially by comprising the before-mentioned means, such that a prefabricated insertion of all relevant parts for connecting, controlling, and securing the battery unit in the receiving space 2 to the bicycle frame 1 is possible by preferably one insertion step.

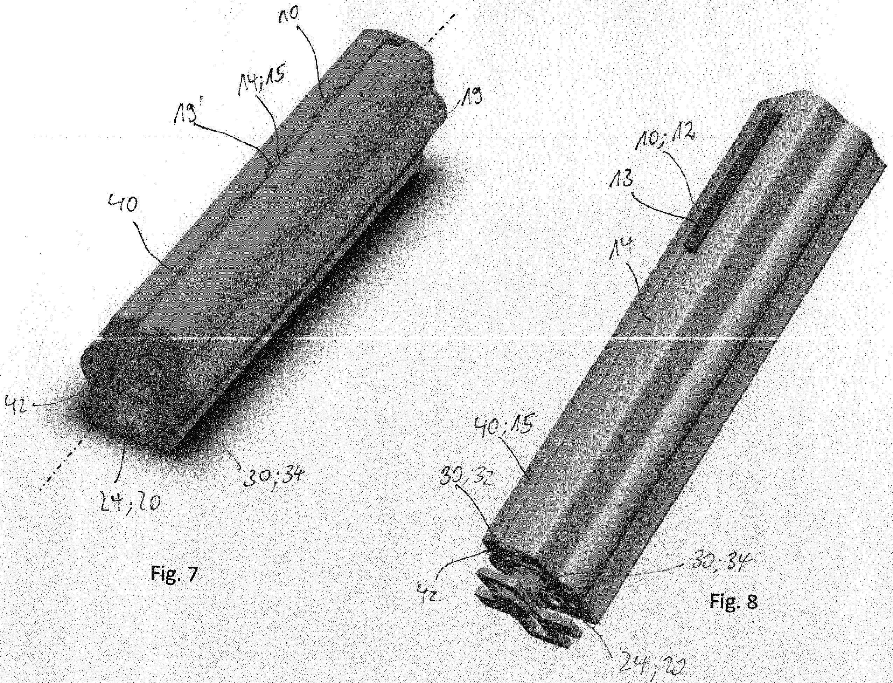

The battery locking element 22 is disclosed e.g. Fig. 6. The battery unit 40, as shown with Figs. 7 and 8, comprises at least one counter-locking element 24 of the battery locking means 20, arranged so that it can be mechanically connected to the at least one electrically driven locking element 22 of the battery locking means 20, arranged at the bicycle frame 1 in such a way that the battery unit 40 can be translationally and/or rotationally moved in the receiving space 4 of the tube section 2 of the bicycle frame 1 between the temporary mounting position Pt and the final mounting position P_{f} along a second axis A₂, as for example shown with Fig. 3 and 4. This axis A₂ may be identical to the axis A₁, it may however also be different and especially deviating from the axis A₁, as will be explained in the following in more detail. The axis A₁ and/ A₂ might be identical to a battery axis main A_{B}. The battery locking means 20 is preferably arranged at least partially at an end portion 6 of the tube section (see Figs. 6) and especially in the vicinity of the electromotive bicycle drive 50, arranged at the frame 1, and/or at least at the front face 42 portion of the longitudinal battery unit 40. This is, for example, shown with Figs. 5 - 8.

The locking element 22, as e.g. shown with Fig. 6, is cooperating with the counter-locking element 24 at the battery unit 40 (see e.g. Fig. 7 or 8). The locking means and the respective elements 22, 24 can be arranged in multiple ways. It can, for example, be in a crown element rotating and cooperating with a counter locking element, e.g. with toothed rack or similar toothed element; it can be a moveable hooking element, or a threaded element especially rotating and thereby cooperating with the counter-locking element 24. It can be a linear moveable element cooperating with the counter-locking element 24 or any other forcing element, optionally all means and elements arranged for at least pushing or pulling the battery unit in at least one direction along the axis A₂. Also, the locking element 22 may be arranged for holding the battery unit in the respective position and especially in the final mounting position. Also, it is possible to arrange the locking element 22 such that it holds the battery unit in the temporary mounting position and/or in at least one position in-between the final mounting position and the temporary mounting position. The locking element 22 may be arranged for cooperating with the counter-locking element 24 at the battery unit 40 to connect with and/or disconnect from the battery unit 40 and/or to force the battery unit from the temporary mounting position Pₜ to the final mounting position P_{f} and/or to force the battery unit from the final mounting position P_{f} to the temporary mounting position Pₜ. As explained, also holding of the battery unit relatively to the receiving space might be possible by a respectively arranged locking element 22 and the cooperating counter-locking element 24.

As explained before, battery guiding means 10 are provided for guiding the battery unit 40 along a first axis A₁ between the insertion position Pᵢ and the temporary mounting position Pₜ in the receiving space 4. The battery guiding means can also be provided for guiding the battery unit between the temporary mounted position Pt and the final mounting position P_{f}. Further, the battery guiding means 10 may be arranged such that in the temporary mounting position Pt is mounted fixed at the tube section but moveable along one direction only, optionally along the moving direction to the final mounting position P_{f} along the first axis A₁ and/or the second axis A₂.

Further optionally, the battery guiding means 10 is arranged such that the battery unit 40 is moved along the first axis A₁ between the insertion position Pᵢ and/or the temporary mounting position Pt parallel to a main axis Aₓ of the tube section 2 (see e.g. Fig 5) and/or between the temporary mounting position Pₜ and the final mounting position P_{f} along a second axis A₂. As mentioned, this second axis A₂ optionally is the first axis A₁.

Optionally and as shown e.g. with embodiments of Figs. 8 - 10 and Fig. 11 - 13, the battery guiding means 10 comprises at least one guiding element 12, at the tube section 2 and at least one cooperating counter-guiding element 14 at the battery unit 40, or vice versa. Optionally, the guiding element 12 and the counter-guiding element 14 are cooperating such that the battery unit 40 is moveable and especially slideable between the insertion position Pᵢ and the temporary mounting position Pₜ and/or between the temporary mounting position Pₜ and the final mounting position P_{f}.

The guiding element 12 may comprise at least one slot-nut 13 arranged at the tube section 2. The counter-guiding element 14 may comprise at least one cooperating slot 15, arranged at the battery unit 40. Of course this arrangement can be provided vice versa. Optionally, slot 50 is extending co-axially to the first axis A₁ and/or the second axis A₂.

By attaching the guiding element 12 to the counter-guiding element 14, the battery unit 40 is secured but moveable along at least one.

With the two embodiments shown with Figs. 7 - 10 and Figs. 11- 13, the counter-guiding element 14 and the slot 15, respectively are provided with insert sections 19 cooperating with insert protections 11 at the guiding element 12 and the slot-nut 13 respectively. By such arrangement, the guiding element 12 can be inserted into the counter-guiding element 14 in a moveable manner.

With this embodiment, the guiding element 12 is attached to the inner side of the tube section 2 and especially its side wall 9 and especially by use of attachment means 17, for example bolts 17.

With a special embodiment the guiding element 12 comprises multiple insert projections 11 cooperating with multiple insert sections 19. By such an arrangement, the battery unit 40 can be attached to the guiding means 10 in an easy manner and be slid along the axes A₁ and/or A₂ without the danger of being swivelled and deviating from these axes A₁ and/or A₂, thereby getting stuck.

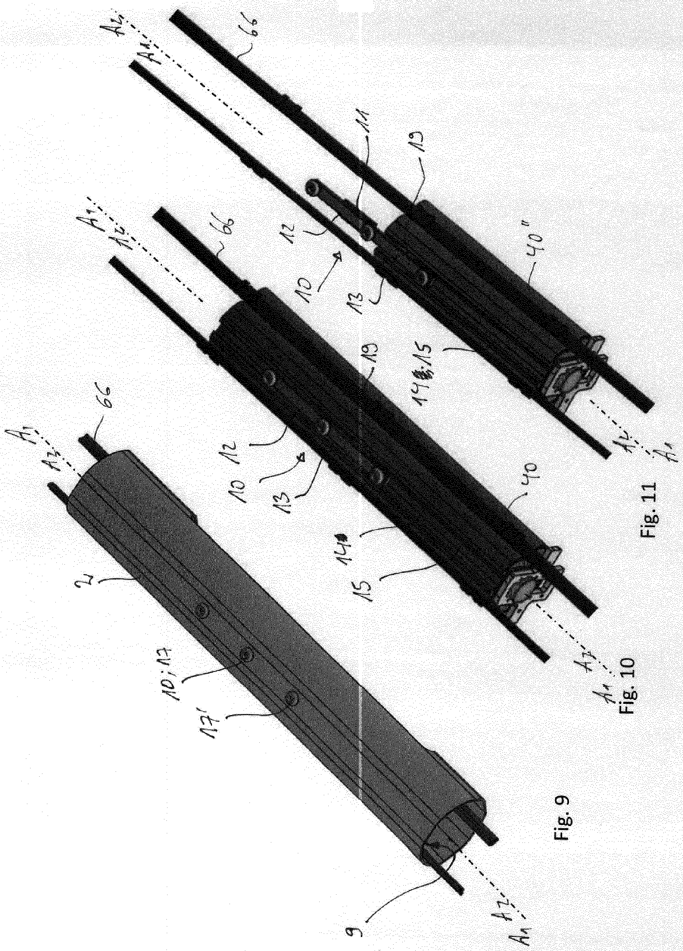

A further embodiment of the battery guiding means 10 is shown with Figs. 11 - 13, in detail deferring from the before explained embodiment by a shorter guiding element 12 and slot-nut 13, respectively. The slot-nut 13, again, comprises insert projections 11 arranged to be inserted into a counter-guiding element 14 and a slot 15 respectively via insert sections 19. Again, the guiding element 12 may be attached to the tube section 2 and especially inside of the tube section in the receiving space 4.

In general, the embodiments shown before can of course also be provided in a vice versa manner, namely that the guiding element 12 is attached to the battery and the counter-guiding element 14 is attached to the bicycle frame.

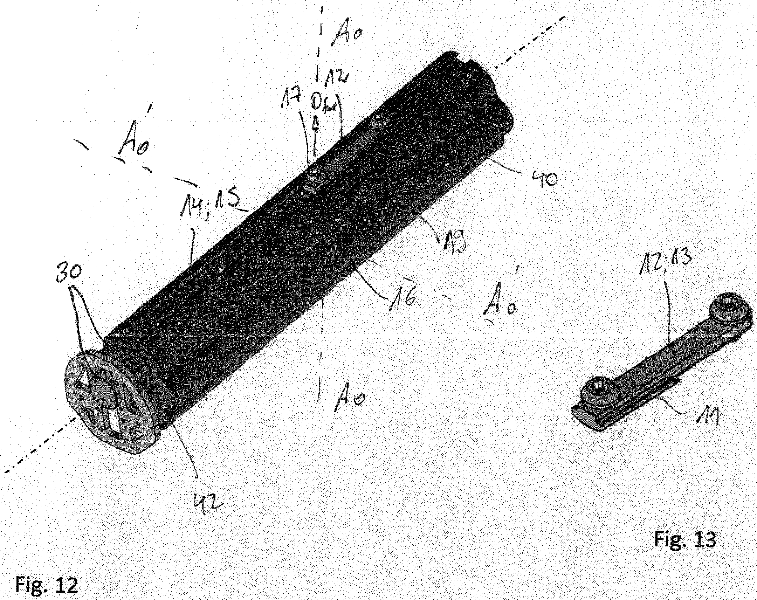

The guiding element 12 of the embodiment shown with Figs. 12 and 13 may comprise a wedge or similar deviating means 16, arranged such that the battery unit is forced in a forcing direction D_{for}and against at least one counter element, for example the inner side of the tube section 2 or a respective projection. This guarantees a tight fight of the battery unit 40 at the respective position in the receiving space and e.g. in the final mounting position. Of course it is possible to provide such a wedge or similar deviating means in such a way that the battery unit 40 is forced in such forcing direction when or close before reaching the final mounting position. Optionally, the forcing axis of the forcing direction D_{for} is deviating from the first axis A₁ and/or the second axis A₂.

The battery guiding means 10 is arranged such that, after leaving the insertion position Pᵢ, the battery unit 40 is, at least in a section detained, from moving in directions deviating from the first axis A₁ and/or from the second axis A₂. This guarantees a reliable movement along the respective axes. Optionally, the battery unit is detained but having in at least one section some play along at least one orthogonal axis Aₒ, orthogonal to the first axis A₁ and/or the second axis A₂. As mentioned, this allows a smooth movement along the respective axes. Also, this play can be used in combination with the wedge or similar deviating means for allowing a slight movement in the forcing direction D_{for}.

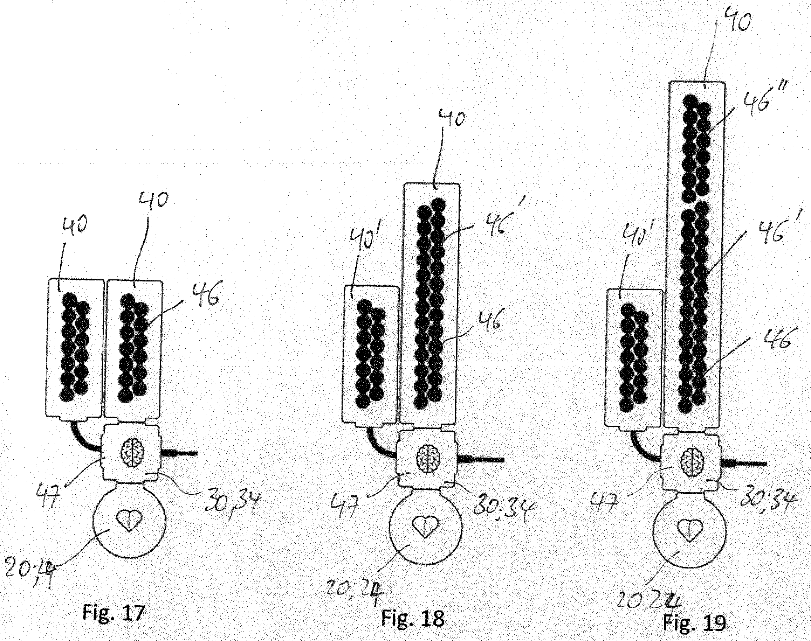

As can be seen with Figs. 10 and 11 the inventive system can be provided with different battery units, especially with batteries units 40 having different sizes and especially a different length, without making major adaptions to the guiding means, the tube section, etc. necessary. This is, for example, shown with the embodiments of Figs. 9 - 10 and 11 - 13 and also with Figs. 17 - 19 and 20 - 22.

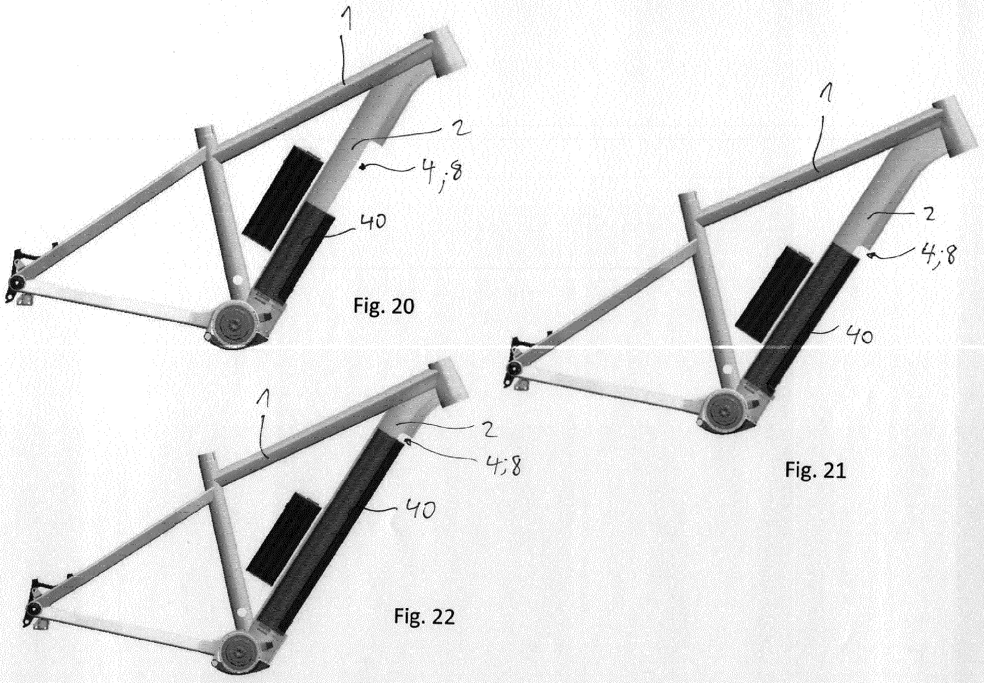

Here is shown, that the battery units 40 may be different in size (see Fig. 20 and 21) without making it necessary to adapt the size of the opening 8. If a longer battery unit 40 should be provided, of course the opening 8 may be adapted.

Adapting the length of the battery unit 40 is shown, for example, with Figs. 17 -19. The battery units 40, for example, comprise a different number of battery cells 46, having different sizes respectively. Also, the battery unit 40 may comprise battery control means 47, for example for controlling the charging of the battery, the energy supply, and/or anti-theft means, coding means etc. Also, the battery unit 40 may be provided with at least part of the locking means 20 and especially the counter locking element 24, and connection means 30 and especially a counter-connector element 34. This connection means 30 and the counter-connector element 34 will be explained more in detail in the following.

Figs. 5 - 8 e.g. show connection means 30 for electrically connecting the battery unit 40 with respective means at the bicycle frame 1 and especially the electromotive bicycle drive 50. The connection means 30 comprises a connector element 32 at the bicycle frame 1 and especially at the insert element 60 and a counter-connector element 34 at the battery unit 40. The connection may be established by a translational and/or rotational movement or relative movement of these two elements 32, 34. With the embodiment shown with Figs. 5 and 8, the connection is established by a translational movement. The counter-connector element 34 and the connector element 32 may be provided as a plug and receiver arrangement.

Further, the connection means 30 may be arranged such that the battery unit 40 is at least partially electrically connected to the connection element 32 in the temporary mounting position Pₜ. This could mean that some units are electrically connected wherein other units are not. Also, the battery unit may be connected to the connection element 32 in the final mounting position and/or also in positions in-between. Also, the battery unit 40 may be electrically disconnected from the connection element 32 before reaching the temporary mounting position Pₜ and/or before reaching the final mounting position P_{f}. This is especially easily achieved by providing the connection means 30 and the respective connection element 32 and counter-connection element 34 as to be connectable via a translational movement and especially a movement in parallel to the movement axes A₁ and/or A₂.

As can be seen especially with Figs. 5, 6 and 9 - 11, inside the tube section 2 wiring means 66, for example information guiding means, electricity guiding means, cables, optical cables, but also hydraulic tubes and/or bowden cables may be arranged. It might be possible to provide respective recesses in the battery unit, such that the wiring means 66 be arranged in not hindering movement of the battery unit 40 in the receiving space 4.

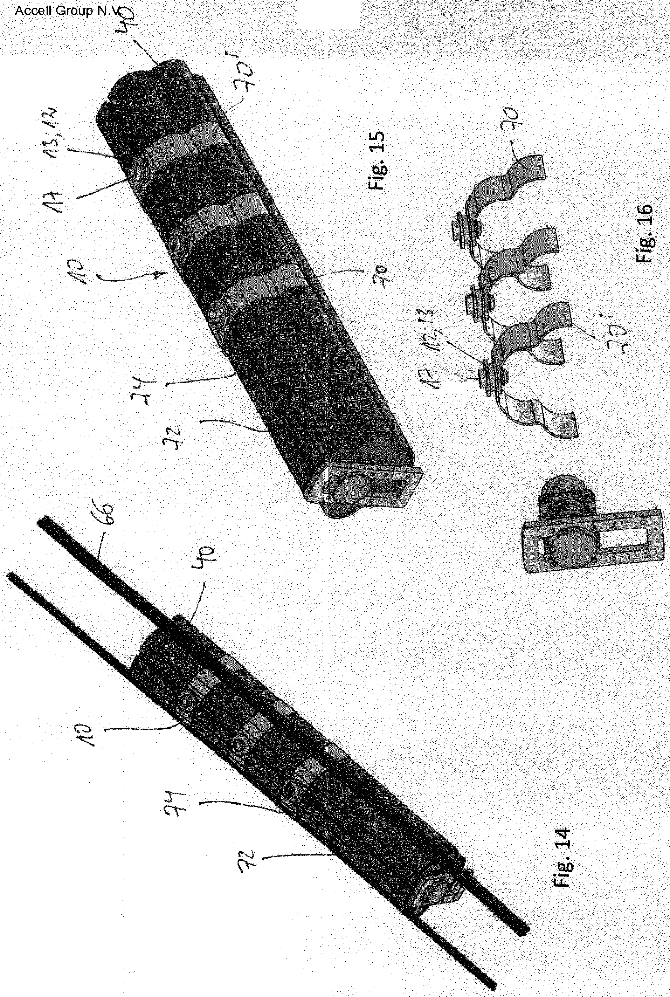

A further embodiment of the bicylcew frame 1, the battery unit 40 and the battery guiding means 10 is shown with Figs. 14 - 16. With this embodiment, the guiding element 12 is not attached at the bicycle frame but at the battery unit 40. For such attachment holding means 70 and especially bands 70 may be provided. At such holding means 70, attachments 17 are provided carrying the guiding elements 12 and especially slot-nuts 13. Such guiding elements 12 may be inserted to respective counter-guiding elements and especially slots, arranged at the tube section 2 and especially inside the tube section 2 at the receiving space, for example shown with Fig. 6. This counter-guiding element may be provided similar to the counter-guiding element 14 shown with Fig. 12 but at the tube section and not at the battery unit. In principle it may be possible to provide the system shown with Figs. 14 - 16 similar but vice versa to the system shown with Figs. 9 - 13.

As shown with Fig. 14 and 15, the battery unit 40 may also comprise at least one groove 72, optionally provided with groove openings 74 where the holding means 40 can be inserted. For such, the holding means 70 might be provided with cooperating groove sliding means 76.

However, other modifications, variations and alternatives are also possible. The specifications, drawings and examples are, accordingly, to be regarded in an illustrative rather than in a restrictive sense.

In the claims, any reference signs placed between parentheses shall not be construed as limiting the claim. The mere fact that certain measures are recited in mutually different claims does not indicate that a combination of these measures cannot be used to advantage.

Finally, the above-discussion is intended to be merely illustrative of the present systems and/or methods and should not be construed as limiting the appended claims to any particular embodiment or group of embodiments.

### Reference signs

- 1: bicycle frame
- 2: tube section
- 4: receiving space
- 6: end position
- 8: insertion opening
- 9: side wall
- 10: battery guiding means
- 11: insert projection
- 12: guiding element
- 13: slot nut
- 14: counter guiding element
- 15: slot
- 16: deviating means
- 17: attachment means
- 20: battery locking means
- 22: locking element
- 24: counter locking element
- 30: connection means
- 32: connector element
- 34: counter connector element
- 40: battery unit
- 42: front face
- 46: battery cell
- 47: battery control means
- 50: electromotive bicycle drive
- 60: insert element
- 62: auxiliary battery unit
- 64: control means
- 66: wiring means
- 70: holding means
- 72: groove
- 74: groove opening
- A₁: first axis
- A₂: second axis
- Aᵢ: insertion axis
- Aₓ: main axis
- A_{B}: battery main axis
- P-Pᵢ: pre-insertion position
- Pᵢ: insertion position
- Pt: temporary mounting position
- P_{f}: final mounting position
- D_{for}: forcing direction
- Di: insertion direction

## Claims

1. Bicycle frame (1), comprising:
a tube section (2) having a receiving space (4) for receiving at least one battery unit (40), suitable as a source of energy for an electromotive bicycle drive (50);
battery guiding means (10), for guiding the battery unit (40) along a first axis A₁ between an insertion position Pᵢ and a temporary mounting position Pt in the receiving space (4);
battery locking means (20), for locking and/or unlocking the battery unit (40) in the receiving space (4) in a final mounting position P_{f};
**characterized in that**
the battery locking means (20) is an active locking means, comprising at least one electrically driven locking element (22), arranged for translationally and/or rotationally actively moving the battery unit (40) between its temporary mounting position Pt and its final mounting position Pf along a second axis A2, namely from the temporary mounting position Pt to the final mounting position Pf. , wherein the second axis A₂ is optionally the first axis A₁.

2. Bicycle frame according to claim 1,
**characterized in that**
the battery locking means (20) is arranged such that the battery unit (40) can be moved from the final mounting position P_{f} to the temporary mounting position Pt by the battery locking means (20).

3. Bicycle frame according to claim 1 or 2,
**characterized in that**
the receiving space (4) at least partly is an interior space inside the tube section (2).

4. Bicycle frame according to any one of the preceding claims,
**characterized in that**
the battery unit (40) is a longitudinal battery unit (40), having a front face (42), and is arranged, when it moves from the insertion position Pᵢ to the temporary mounting position Pt and/or the final mounting position P_{f} with such front face (42) ahead and/or when it moves from the final mounting position P_{f} and/or the temporary mounting position Pₜ to the insertion position Pᵢ with such front face (42) at the back

5. Bicycle frame according to any one of the preceding claims,
**characterized in that**
the battery locking means (20) is arranged at least partly at an end portion (6) of the tube section (2) and especially in the vicinity of an electromotive bicycle drive (50), arranged at the frame (1), and/or at least partly at a front face (42) portion of a longitudinal battery unit (40).

6. Bicycle frame according to any one of the preceding claims,
**characterized in that**
the tube section (2) comprises an insertion opening (8), optionally arranged extending along at a side wall (9) of the tube section (2) and/or with a main extension axis A parallel to the first axis A₁, arranged such that the battery unit (40) can be positioned in the insertion position Pᵢ, optionally arranged at least partially in the receiving space (4), and especially by a movement along an insertion axis Aᵢ, deviating from the first axis A₁, and especially a movement orthogonal to the first axis A₁.

7. Bicycle frame according to any one of the preceding claims,
**characterized in that**
the battery guiding means (10) is arranged such that in the temporary mounting position Pₜ the battery unit is mounted fixed at the tube section but movable along one direction only, optionally along the moving direction to the final mounting position P_{f} along the first axis A₁ and/or the second axis A₂.

8. Bicycle frame according to any one of the preceding claims,
**characterized in that**
the battery guiding means (10) is arranged such that the battery unit (40) is movable along the first axis A₁ between the insertion position Pᵢ and the temporary mounting position Pt parallel to a main axis Aₓ of the tube section (2) and/or between the temporary mounting position Pt and the final mounting position P_{f} along a second axis A₂.

9. Bicycle frame according to any one of the preceding claims,
**characterized in that**
the battery guiding means (10) is arranged such that, after leaving the insertion position Pᵢ, the battery unit (40) is at least in a section detained from moving in directions deviating from the first axis A₁ and/or from the second axis A₂, and optionally detained but having, in at least one section, some play along an orthogonal axis Aₒ, orthogonal to the first axis A₁ and/or the second axis A₂.

10. Bicycle frame according to any one of the preceding claims,
**characterized in that**
a wedge or a similar deviating mean (16) is provided and arranged such that, especially when the battery unit (40) is moved from the temporary mounting position Pt to the final mounting position P_{f}, the battery unit (40) is forced in a forcing direction D_{for} and against at least one counter element, optionally the forcing axis A_{for} of the forcing direction D_{for} deviating from the first and/or the second axis A₂.

11. Bicycle frame according to any one of the preceding claims,
**characterized in that**
the battery guiding means (10) comprises at least one guiding element (12) at the tube section (2) and at least one cooperating counter guiding element (14) at the battery unit (40), or vice versa, the guiding element (12) and the counter guiding element (14) cooperating such that the battery unit (40) is movable and especially slideable between the insertion position Pᵢ and the temporary mounting position Pt and/or between the temporary mounting position Pt and the final mounting position P_{f}.

12. Bicycle frame according to claim 11,
**characterized in that**
the guiding element (12) comprises at least one slot-nut (13), arranged at the tube section (2), and the counter guiding element (14) at least one cooperating slot (15), arranged at the battery unit (40), or vice versa, optionally the slot (15) extending parallel to the first axis A₁ and/or the second axis A₂.

13. Bicycle frame according to any one of the preceding claims,
**characterized in that**
the locking element (22), is arranged to cooperate with a counter locking element (24) at the battery unit (40), to connect with and/or to disconnect from the battery unit (40) and/or to force the battery unit (40) from the temporary mounting position Pt to the final mounting position P_{f} and/or to force the battery unit (40) from the final mounting position P_{f} to the temporary mounting position Pt.

14. Bicycle frame according to any one of the preceding claims,
**characterized in that**
the locking element (22), is arranged as a crown element and/or a hocking element and/or a rotating threated element and/or a linear movable force element and/or similar forcing element, at least pushing and/or pulling and/or holding the Battery unit relative to the receiving space

15. Bicycle frame according to any one of the preceding claims,
**characterized in that**
a connection means (30) is provided at the frame (1) and optionally in the receiving space (4) of the tube section (2) or accompanying the tube section (2), comprising at least one connector element (32), for electrically connecting the battery unit (40) to a battery controller or a similar electrical control means.

16. Bicycle frame according to claim 15,
**characterized in that**
the battery unit (40) is electrically connected to the connection element (32) in the temporary mounting position Pt and/or the final mounting position P_{f} and/or also in the positions in-between and/or disconnected from the connection element (32) before reaching the temporary mounting position Pt and/or before reaching the final mounting position P_{f}.

17. Bicycle frame according to any one of the preceding claims,
**characterized in that**
the battery locking means (20) and/or the connection means (30) are at least partly arranged in an insert element (60) arranged at the frame (1) and especially in the receiving space of the tube section (2).

18. Bicycle frame according to claim 17,
**characterized in that**
the insert element (60) comprises an auxiliary battery unit (62), arranged for at least temporarily providing electrical energy to the battery locking means (20) and/or electrical means of a bicycle and/or comprises a control means (64), like a battery controller or a similar electrical controller.

19. Bicycle frame according to claim 15 or 16,
**characterized in that**
the insert element (60) can be inserted to and/or removed from the tube section (2) via the insertion opening (8), optionally in a state equipped with the battery locking means (20) and/or a connection means (30) and/or an auxiliary battery unit (62) and/or a control means (64).

20. Method for mounting and/or detaching a battery unit (40), suitable as a source of energy for an electromotive bicycle drive (50), to a bicycle frame (1), comprising the steps of:
inserting the battery unit to a tube section (2) of the bicycle frame (1), having a receiving space (4) for receiving at least one battery unit (40) in an insertion position Pᵢ;
moving the battery unit along a battery guiding means (10) along a first axis A₁ from the insertion position Pᵢ to a temporary mounting position Pt in the receiving space (4);
locking the battery unit by a battery locking means (20), for locking the battery unit (40) in the receiving space (4) in a final mounting position P_{f};
**characterized in that**
while locking the battery unit (40), the battery unit (40) is moved by at least one electrically driven locking element (22) of the battery locking means (20), arranged as an active locking means, translationally and/or rotationally between its temporary mounting position Pt and its final mounting position P_{f} along a second axis A₂, wherein the first axis A₁ is optionally the second axis A₂.

## Patentansprüche

1. Fahrradrahmen (1), umfassend:
einen Rohrabschnitt (2), der einen Aufnahmeraum (4) zum Aufnehmen von wenigstens einer Batterieeinheit (40), die als eine Energiequelle für einen elektromotorischen Fahrradantrieb (50) geeignet ist, aufweist;
ein Batterieführungsmittel (10) zum Führen der Batterieeinheit (40) entlang einer ersten Achse A₁ zwischen einer Einsetzposition Pᵢ und einer temporären Montageposition Pt im Aufnahmeraum (4);
ein Batterieverriegelungsmittel (20), zum Verriegeln und/oder Entriegeln der Batterieeinheit (40) im Aufnahmeraum (4) in einer endgültigen Montageposition P_{f};
**dadurch gekennzeichnet, dass**
das Batterieverriegelungsmittel (20) ein aktives Verriegelungsmittel ist, umfassend mindestens ein elektrisch betriebenes Verriegelungselement (22), dafür angeordnet,
die Batterieeinheit (40) aktiv translatorisch und/oder drehend zwischen ihrer temporären Montageposition Pt und ihrer endgültigen Montageposition Pf entlang einer zweiten Achse A2, nämlich von der temporären Montageposition Pt zur endgültigen Montageposition Pf, zu bewegen, wobei die zweite Achse A₂ optional die erste Achse A₁ ist.

2. Fahrradrahmen gemäß Anspruch 1,
**dadurch gekennzeichnet, dass**
das Batterieverriegelungsmittel (20) derart angeordnet ist, dass die Batterieeinheit (40) durch das Batterieverriegelungsmittel (20) von der endgültigen Montageposition P_{f} in die temporäre Montageposition Pt bewegt werden kann.

3. Fahrradrahmen nach Anspruch 1 oder 2,
**dadurch gekennzeichnet, dass**
der Aufnahmeraum (4) wenigstens teilweise ein Innenraum innerhalb des Rohrabschnitts (2) ist.

4. Fahrradrahmen nach einem der vorhergehenden Ansprüche,
**dadurch gekennzeichnet, dass**
die Batterieeinheit (40) eine Längsbatterieeinheit (40) ist, die eine Vorderseite (42) aufweist und so angeordnet ist, dass sich dann, wenn sie sich von der Einsetzposition Pᵢ in die temporäre Montageposition Pt und/oder die endgültige Montageposition P_{f} bewegt, diese Vorderseite (42) vorn befindet, und/oder sich dann, wenn sie sich von der endgültigen Montageposition P_{f} und/oder der temporären Montageposition Pt in die Einsetzposition Pᵢ bewegt, diese Vorderseite (42) hinten befindet.

5. Fahrradrahmen nach einem der vorhergehenden Ansprüche,
**dadurch gekennzeichnet, dass**
das Batterieverriegelungsmittel (20) wenigstens teilweise an einem Endabschnitt (6) des Rohrabschnitts (2) und insbesondere in der Nähe eines elektromotorischen Fahrradantriebs (50), der am Rahmen (1) angeordnet ist, und/oder wenigstens teilweise an einem Abschnitt der Stirnfläche (42) einer Längsbatterieeinheit (40) angeordnet ist.

6. Fahrradrahmen nach einem der vorhergehenden Ansprüche,
**dadurch gekennzeichnet, dass**
der Rohrabschnitt (2) eine Einsetzöffnung (8) umfasst, die optional so angeordnet ist, dass sie sich entlang einer Seitenwand (9) des Rohrabschnitts (2) erstreckt und/oder mit einer Hauptverlängerungsachse A parallel zur ersten Achse A₁, so angeordnet, dass die Batterieeinheit (40) in der Einsetzposition Pᵢ positioniert werden kann, optional zumindest teilweise im Aufnahmeraum (4) angeordnet, und insbesondere durch eine Bewegung entlang einer Einsetzachse Aᵢ, die von der ersten Achse A₁ abweicht, sowie insbesondere eine Bewegung senkrecht zur ersten Achse A₁.

7. Fahrradrahmen nach einem der vorhergehenden Ansprüche,
**dadurch gekennzeichnet, dass**
das Batterieführungsmittel (10) so angeordnet ist, dass in der temporären Montageposition Pt die Batterieeinheit am Rohrabschnitt befestigt montiert ist, aber nur entlang einer Richtung, optional entlang der Bewegungsrichtung zur endgültigen Montageposition P_{f} entlang der ersten Achse A₁ und/oder der zweiten Achse A₂, bewegbar ist.

8. Fahrradrahmen nach einem der vorhergehenden Ansprüche,
**dadurch gekennzeichnet, dass**
das Batterieführungsmittel (10) so angeordnet ist, dass die Batterieeinheit (40) entlang der ersten Achse A₁ zwischen der Einsetzposition Pᵢ und der temporären Montageposition Pt parallel zu einer Hauptachse Aₓ des Rohrabschnitts (2) und/oder zwischen der temporären Montageposition Pt und der endgültigen Montageposition P_{f} entlang einer zweiten Achse A₂ bewegbar ist.

9. Fahrradrahmen nach einem der vorhergehenden Ansprüche,
**dadurch gekennzeichnet, dass**
das Batterieführungsmittel (10) so angeordnet ist, dass sich die Batterieeinheit (40) nach Verlassen der Einsetzposition Pᵢ wenigstens in einem Abschnitt befindet, der von einem Bewegen in Richtungen, die von der ersten Achse A₁ und/oder der zweiten Achse A₂ abweichen, abgehalten ist, und optional abgehalten ist, aber in wenigstens einem Abschnitt etwas Spiel entlang einer senkrechten Achse Aₒ, senkrecht zur ersten Achse A₁ und/oder zur zweiten Achse A₂, aufweist.

10. Fahrradrahmen nach einem der vorhergehenden Ansprüche,
**dadurch gekennzeichnet, dass**
ein Keil oder ein ähnliches ablenkendes Mittel (16) bereitgestellt und so angeordnet ist, dass, insbesondere, wenn die Batterieeinheit (40) von der temporären Montageposition Pₜ in die endgültige Montageposition P_{f} bewegt wird, die Batterieeinheit (40) in einer Erzwingungsrichtung D_{for} und gegen wenigstens ein Gegenelement, optional die Erzwingungsachse A_{for} der Erzwingungsrichtung D_{for}, abweichend von der ersten und/oder der zweiten Achse A₂ gedrückt wird.

11. Fahrradrahmen nach einem der vorhergehenden Ansprüche,
**dadurch gekennzeichnet, dass**
das Batterieführungsmittel (10) wenigstens ein Führungselement (12) am Rohrabschnitt (2) und wenigstens ein kooperierendes Gegenführungselement (14) an der Batterieeinheit (40) oder umgekehrt umfasst, wobei das Führungselement (12) und das Gegenführungselement (14) so zusammenwirken, dass die Batterieeinheit (40) zwischen der Einsetzposition Pᵢ und der temporären Montageposition Pt und/oder zwischen der temporären Montageposition Pt und der endgültigen Montageposition P_{f} bewegbar und insbesondere verschiebbar ist.

12. Fahrradrahmen nach Anspruch 11,
**dadurch gekennzeichnet, dass**
das Führungselement (12) wenigstens eine Nutmutter (13), angeordnet am Rohrabschnitt (2), und das Gegenführungselement (14) wenigstens einen zusammenwirkenden Schlitz (15), angeordnet an der Batterieeinheit (40), oder umgekehrt, umfasst, wobei sich der Schlitz (15) optional parallel zur ersten Achse A₁ und/oder zur zweiten Achse A₂ erstreckt.

13. Fahrradrahmen nach einem der vorhergehenden Ansprüche,
**dadurch gekennzeichnet, dass**
das Verriegelungselement (22) so angeordnet ist, dass es mit einem Gegenverriegelungselement (24) an der Batterieeinheit (40) zusammenwirkt, um sich mit der Batterieeinheit (40) zu verbinden und/oder von ihr zu trennen und/oder die Batterieeinheit (40) von der temporären Montageposition Pt in die endgültige Montageposition P_{f} zu bewegen und/oder die Batterieeinheit (40) von der endgültigen Montageposition P_{f} in die temporäre Montageposition Pt zu bewegen.

14. Fahrradrahmen nach einem der vorhergehenden Ansprüche,
**dadurch gekennzeichnet, dass**
das Verriegelungselement (22) als ein Kronenelement und/oder ein einhakendes Element und/oder ein rotierendes Gewindeelement und/oder linear bewegbares Kraftelement und/oder ähnliches zwingendes Element angeordnet ist, die Batterieeinheit relativ zum Aufnahmeraum zumindest schiebend und/oder ziehend und/oder haltend.

15. Fahrradrahmen nach einem der vorhergehenden Ansprüche,
**dadurch gekennzeichnet, dass**
ein Verbindungsmittel (30) am Rahmen (1) und optional im Aufnahmeraum (4) des Rohrabschnitts (2) oder den Rohrabschnitt (2) begleitend bereitgestellt ist, umfassend wenigstens ein Verbinderelement (32) zum elektrischen Verbinden der Batterieeinheit (40) mit einer Batteriesteuerung oder einem ähnlichen elektrischen Steuerungsmittel.

16. Fahrradrahmen nach Anspruch 15,
**dadurch gekennzeichnet, dass**
die Batterieeinheit (40) mit dem Verbindungselement (32) in der temporären Montageposition Pt und/oder der endgültigen Montageposition P_{f} und/oder auch in den Positionen dazwischen elektrisch verbunden und/oder vor Erreichen der temporären Montageposition Pt und/oder vor Erreichen der endgültigen Montageposition P_{f} vom Verbindungselement (32) getrennt ist.

17. Fahrradrahmen nach einem der vorhergehenden Ansprüche,
**dadurch gekennzeichnet, dass**
das Batterieverriegelungsmittel (20) und/oder das Verbindungsmittel (30) wenigstens teilweise in einem Einsetzelement (60) angeordnet sind, das am Rahmen (1) und insbesondere im Aufnahmeraum des Rohrabschnitts (2) angeordnet ist.

18. Fahrradrahmen nach Anspruch 17,
**dadurch gekennzeichnet, dass**
das Einsetzelement (60) eine Hilfsbatterieeinheit (62) umfasst, angeordnet für ein zumindest zeitweiliges Bereitstellen elektrischer Energie für das Batterieverriegelungsmittel (20) und/oder elektrische Mittel eines Fahrrads, und/oder ein Steuerungsmittel (64) wie eine Batteriesteuerung oder eine ähnliche elektrische Steuerung umfasst.

19. Fahrradrahmen nach Anspruch 15 oder 16,
**dadurch gekennzeichnet, dass**
das Einsetzelement (60) über die Einsetzöffnung (8) in den Rohrabschnitt (2) eingesetzt und/oder daraus entfernt werden kann, optional in einem Zustand, ausgestattet mit dem Batterieverriegelungsmittel (20) und/oder einem Verbindungsmittel (30) und/oder einer Hilfsbatterieeinheit (62) und/oder einem Steuerungsmittel (64).

20. Verfahren zum Montieren und/oder Abnehmen einer Batterieeinheit (40), die als Energiequelle für einen elektromotorischen Fahrradantrieb (50) geeignet ist, an einem Fahrradrahmen (1), umfassend die Schritte:
Einsetzen der Batterieeinheit in einen Rohrabschnitt (2) des Fahrradrahmens (1), aufweisend einen Aufnahmeraum (4) zum Aufnehmen wenigstens einer Batterieeinheit (40) in einer Einsetzposition Pᵢ;
Bewegen der Batterieeinheit entlang eines Batterieführungsmittels (10) entlang einer ersten Achse A₁ von der Einsetzposition Pᵢ zu einer temporären Montageposition Pt im Aufnahmeraum (4);
Verriegeln der Batterieeinheit durch ein
Batterieverriegelungsmittel (20), zum Verriegeln der Batterieeinheit (40) in dem Aufnahmeraum (4) in einer endgültigen Montageposition P_{f};
**dadurch gekennzeichnet, dass**
während des Verriegelns der Batterieeinheit (40) die Batterieeinheit (40) durch wenigstens ein elektrisch angetriebenes Verriegelungselement (22) des als aktives Verriegelungsmittel (20) angeordneten Batterieverriegelungsmittels translatorisch und/oder drehend zwischen ihrer temporären Montageposition Pt und ihrer endgültigen Montageposition P_{f} entlang einer zweiten Achse A₂ bewegt wird, wobei die erste Achse A₁ optional die zweite Achse A₂ ist.

## Revendications

1. Cadre de bicyclette (1), comprenant :
une section de tube (2) ayant un espace de réception (4) destiné à recevoir au moins une unité de batterie (40), qui peut servir de source d'énergie pour un entraînement de bicyclette à force électromotrice (50) ; un moyen de guidage de batterie (10), destiné à guider l'unité de batterie (40) le long d'un premier axe A₁ entre une position d'insertion Pᵢ et une position de montage temporaire Pt dans l'espace de réception (4) ;
un moyen de verrouillage de batterie (20), destiné à verrouiller et/ou déverrouiller l'unité de batterie (40) dans l'espace de réception (4) dans une position de montage finale P_{f} ;
**caractérisé en ce que**
le moyen de verrouillage de batterie (20) est un moyen de verrouillage actif, comprenant au moins un élément de verrouillage électrique (22), prévu pour déplacer activement en translation et/ou en rotation l'unité de batterie (40) entre sa position de montage temporaire Pt et sa position de montage finale P_{f} le long d'un deuxième axe A₂, à savoir de la position de montage temporaire Pt vers la position de montage finale P_{f}, dans lequel le deuxième axe A₂ est éventuellement le premier axe A₁.

2. Cadre de bicyclette selon la revendication 1,
**caractérisé en ce que**
le moyen de verrouillage de batterie (20) est prévu de sorte que l'unité de batterie (40) puisse être déplacée de la position de montage finale P_{f} vers la position de montage temporaire Pt par le moyen de verrouillage de batterie (20).

3. Cadre de bicyclette selon la revendication 1 ou 2,
**caractérisé en ce que**
l'espace de réception (4) est au moins partiellement un espace intérieur à l'intérieur de la section de tube (2).

4. Cadre de bicyclette selon l'une quelconque des revendications précédentes,
**caractérisé en ce que**
l'unité de batterie (40) est une unité de batterie longitudinale (40), ayant une face avant (42), et est prévue, lorsqu'elle se déplace de la position d'insertion Pᵢ vers la position de montage temporaire Pt et/ou la position de montage finale P_{f}, avec ladite face avant (42) devant, et/ou, lorsqu'elle se déplace de la position de montage finale P_{f} et/ou de la position de montage temporaire Pt vers la position d'insertion Pᵢ, avec ladite face avant (42) à l'arrière.

5. Cadre de bicyclette selon l'une quelconque des revendications précédentes,
**caractérisé en ce que**
le moyen de verrouillage de batterie (20) est prévu au moins partiellement au niveau d'une partie d'extrémité (6) de la section de tube (2) et plus particulièrement à proximité d'un entraînement de bicyclette à force électromotrice (50), prévu au niveau du cadre (1), et/ou au moins partiellement au niveau d'une partie de face avant (42) d'une unité de batterie longitudinale (40).

6. Cadre de bicyclette selon l'une quelconque des revendications précédentes,
**caractérisé en ce que**
la section de tube (2) comprend une ouverture d'insertion (8), éventuellement prévue en s'étendant le long d'une paroi latérale (9) de la section de tube (2) et/ou avec un axe d'extension principal A parallèle au premier axe A₁, prévue de sorte que l'unité de batterie (40) puisse être positionnée dans la position d'insertion Pᵢ, éventuellement prévue au moins partiellement dans l'espace de réception (4), et plus particulièrement par un déplacement le long d'un axe d'insertion Aᵢ, en déviant du premier axe A₁, et plus particulièrement un déplacement orthogonal par rapport au premier axe A₁.

7. Cadre de bicyclette selon l'une quelconque des revendications précédentes,
**caractérisé en ce que**
le moyen de guidage de batterie (10) est prévu de sorte que, dans la position de montage temporaire Pₜ, l'unité de batterie soit montée de manière fixe au niveau de la section de tube, mais mobile le long d'une direction uniquement, éventuellement le long de la direction de déplacement vers la position de montage finale P_{f} le long du premier axe A₁ et/ou du deuxième axe A₂.

8. Cadre de bicyclette selon l'une quelconque des revendications précédentes,
**caractérisé en ce que**
le moyen de guidage de batterie (10) est prévu de sorte que l'unité de batterie (40) soit mobile le long du premier axe A₁ entre la position d'insertion Pᵢ et la position de montage temporaire Pt parallèle à un axe principal Aₓ de la section de tube (2) et/ou entre la position de montage temporaire Pt et la position de montage finale P_{f} le long d'un deuxième axe A₂.

9. Cadre de bicyclette selon l'une quelconque des revendications précédentes,
**caractérisé en ce que**
le moyen de guidage de batterie (10) est prévu de sorte que, après avoir quitté la position d'insertion Pᵢ, l'unité de batterie (40) soit au moins dans une section qui ne peut pas se déplacer dans des directions qui dévient du premier axe A₁ et/ou du deuxième axe A₂, et éventuellement retenue mais présentant, dans au moins une section, un certain jeu le long d'un axe orthogonal Aₒ, orthogonal par rapport au premier axe A₁ et/ou au deuxième axe A₂.

10. Cadre de bicyclette selon l'une quelconque des revendications précédentes,
**caractérisé en ce que**
une cale ou un moyen de déviation similaire (16) est prévu(e) de sorte que, plus particulièrement lorsque l'unité de batterie (40) est déplacée de la position de montage temporaire Pt vers la position de montage finale P_{f}, l'unité de batterie (40) soit forcée dans une direction de forçage D_{for} et contre au moins un contre-élément, l'axe de forçage A_{for} de la direction de forçage D_{for} déviant éventuellement du premier et/ou du deuxième axe A₂.

11. Cadre de bicyclette selon l'une quelconque des revendications précédentes,
**caractérisé en ce que**
le moyen de guidage de batterie (10) comprend au moins un élément de guidage (12) au niveau de la section de tube (2) et au moins un contre-élément de guidage coopératif (14) au niveau de l'unité de batterie (40), ou inversement, l'élément de guidage (12) et le contre-élément de guidage (14) coopérant de sorte que l'unité de batterie (40) soit mobile et puisse plus particulièrement coulisser entre la position d'insertion Pᵢ et la position de montage temporaire Pt et/ou entre la position de montage temporaire Pt et la position de montage finale P_{f}.

12. Cadre de bicyclette selon la revendication 11,
**caractérisé en ce que**
l'élément de guidage (12) comprend au moins un écrou fendu (13), prévu au niveau de la section de tube (2), et le contre-élément de guidage (14) comprend au moins une fente de coopération (15), prévue au niveau de l'unité de batterie (40), ou inversement, la fente (15) s'étendant éventuellement de manière parallèle au premier axe A₁ et/ou au deuxième axe A₂.

13. Cadre de bicyclette selon l'une quelconque des revendications précédentes,
**caractérisé en ce que**
l'élément de verrouillage (22) est prévu pour coopérer avec un contre-élément de verrouillage (24) au niveau de l'unité de batterie (40), afin de se connecter à et/ou de se déconnecter de l'unité de batterie (40) et/ou de forcer l'unité de batterie (40) à passer de la position de montage temporaire Pt à la position de montage finale P_{f} et/ou de forcer l'unité de batterie (40) à passer de la position de montage finale P_{f} à la position de montage temporaire Pt.

14. Cadre de bicyclette selon l'une quelconque des revendications précédentes,
**caractérisé en ce que**
l'élément de verrouillage (22) est prévu comme un élément de couronne et/ou un élément d'accrochage et/ou un élément fileté rotatif et/ou un élément de force mobile linéaire et/ou un élément de forçage similaire, qui pousse et/ou tire et/ou maintient, au moins, l'unité de batterie par rapport à l'espace de réception.

15. Cadre de bicyclette selon l'une quelconque des revendications précédentes,
**caractérisé en ce que**
un moyen de connexion (30) est prévu au niveau du cadre (1) et éventuellement dans l'espace de réception (4) de la section de tube (2), ou accompagne la section de tube (2), comprenant au moins un élément de connecteur (32), destiné à connecter électriquement l'unité de batterie (40) à un contrôleur de batterie ou un moyen de commande électrique similaire.

16. Cadre de bicyclette selon la revendication 15,
**caractérisé en ce que**
l'unité de batterie (40) est connectée électriquement à l'élément de connexion (32) dans la position de montage temporaire Pt et/ou la position de montage finale P_{f} et/ou également dans les positions situées entre celles-ci, et/ou est déconnectée de l'élément de connexion (32) avant d'atteindre la position de montage temporaire Pt et/ou avant d'atteindre la position de montage finale P_{f}.

17. Cadre de bicyclette selon l'une quelconque des revendications précédentes,
**caractérisé en ce que**
le moyen de verrouillage de batterie (20) et/ou le moyen de connexion (30) sont au moins partiellement prévus dans un élément d'insert (60) prévu au niveau du cadre (1) et plus particulièrement dans l'espace de réception de la section de tube (2).

18. Cadre de bicyclette selon la revendication 17,
**caractérisé en ce que**
l'élément d'insert (60) comprend une unité de batterie auxiliaire (62), prévue pour au moins fournir temporairement de l'électricité au moyen de verrouillage de batterie (20) et/ou aux moyens électriques d'une bicyclette, et/ou comprend un moyen de commande (64), tel qu'un contrôleur de batterie ou un contrôleur électrique similaire.

19. Cadre de bicyclette selon la revendication 15 ou 16,
**caractérisé en ce que**
l'élément d'insert (60) peut être inséré dans et/ou retiré de la section de tube (2) via l'ouverture d'insertion (8), éventuellement dans un état équipé du moyen de verrouillage de batterie (20) et/ou d'un moyen de connexion (30) et/ou d'une unité de batterie auxiliaire (62) et/ou d'un moyen de commande (64).

20. Procédé de montage et/ou de détachement d'une unité de batterie (40), qui peut servir de source d'énergie pour un entraînement de bicyclette à force électromotrice (50), sur un cadre de bicyclette (1), comprenant les étapes consistant à :
insérer l'unité de batterie dans une section de tube (2) du cadre de bicyclette (1), ayant un espace de réception (4) destiné à recevoir au moins une unité de batterie (40) dans une position d'insertion Pᵢ ;
déplacer l'unité de batterie le long d'un moyen de guidage de batterie (10) le long d'un premier axe A₁ de la position d'insertion Pᵢ vers une position de montage temporaire Pt dans l'espace de réception (4) ;
verrouiller l'unité de batterie par un moyen de verrouillage de batterie (20), afin de verrouiller l'unité de batterie (40) dans l'espace de réception (4) dans une position de montage finale P_{f} ;
**caractérisé en ce que**
pendant le verrouillage de l'unité de batterie (40), l'unité de batterie (40) est déplacée par au moins un élément de verrouillage électrique (22) du moyen de verrouillage de batterie (20), prévu comme un moyen de verrouillage actif, en translation et/ou en rotation entre sa position de montage temporaire Pt et sa position de montage finale P_{f} le long d'un deuxième axe A₂, dans lequel le premier axe A₁ est éventuellement le deuxième axe A₂.
